# EUROPEAN PATENT APPLICATION

(11) **EP 1 308 771 A1**
(43) Date of publication of application: **07.05.2003**
(21) Application number: 01947858.5
(22) Date of filing: 05.07.2001
(51) Int. Cl.: G02F 1/1337

(54) **LIQUID CRYSTAL ORIENTATING AGENT AND LIQUID CRYSTAL DISPLAY ELEMENT USING THE SAME**

(30) Priority: 07.07.2000 JP 2000206168
(71) Applicant: Nissan Chemical Industries, Ltd., Chiyoda-ku, Tokyo 101-0054 (JP)
(72) Inventor: SAWAHATA, Kiyoshi, c/o Nissan Chemical Ind Ltd, Funabashi-shi, Chiba 274 (JP); SATO, Terumi, c/o Nissan Chemical Ind Ltd, Funabashi-shi, Chiba 274-8507 (JP); SANO, Syunichi, c/o Nissan Chemical Industries Ltd, Funabashi-shi, Chiba 274-85 (JP); ONO, Go, c/o Nissan Chemical Industries Ltd., Funabashi-shi, Chiba 274-8507 (JP); ENDOU, Hideyuki, c/o Nissan Chemical Ind Ltd, Funabashi-shi, Chiba 274-8 (JP)
(74) Representative: Hartz, Nikolai F., Dr.
(86) International application number: JP0105852
(87) International publication number: WO02005024

(57) **Abstract**

It is an object of the present invention to provide a treating agent for liquid crystal alignment, which, as used as an alignment film for a liquid crystal display device, is excellent in the electrical properties such as voltage holding ratio and charge-accumulation, the liquid crystal alignment property, the liquid crystal tilt angle, etc., and further, is excellent in the printing property to substrates and the durability against a rubbing treatment of the coating film, and to provide a liquid crystal display device employing it.

The treating agent for liquid crystal alignment of the present invention, is a composition comprising a polyimide precursor (A) having a tetracarboxylic acid component having an alicyclic structure, and a polyimide precursor (B) having a tetracarboxylic acid component having an alicyclic structure, wherein the solid content ratio of the polyimide precursor (A) to the total solid content is from 5 to 95 wt%.

## Description

### TECHNICAL FIELD

The present invention relates to a treating agent for liquid crystal alignment to be used for a liquid crystal display device. More specifically, the present invention relates to a treating agent for liquid crystal alignment, excellent in coating film uniformity at the time of printing, whereby a liquid crystal alignment film having a high liquid crystal tilt angle and good electrical properties can be obtained, and a liquid crystal display device employing such a treating agent for liquid crystal alignment.

### BACKGROUND ART

Presently, as an alignment film for a liquid crystal display device, it is industrially common to coat a solution of a polyimide precursor or a solvent-soluble type polyimide, followed by baking and then by rubbing treatment.

Properties required for such a liquid crystal alignment film, are a good liquid crystal alignment property and a constant proper degree of liquid crystal tilt angle, and further, for a liquid crystal cell employing an active matrix operation system, electrical properties such as a voltage holding property and a charge-accumulation property, are important. On the other hand, from the viewpoint of producing liquid crystal cells, the printing property of the treating agent for liquid crystal alignment on substrates, and the durability of the coating film against the rubbing treatment, are extremely important properties.

Heretofore, with the treating agent for liquid crystal alignment employing a polyimide precursor, it was difficult to obtain an alignment film having satisfactory electrical properties, although it was excellent in the printing property. Whereas, with the treating agent for liquid crystal alignment employing a solvent-soluble polyimide, although the alignment film was excellent in the electrical properties, the printing property, and the rubbing durability of the coating film was also poor.

Under the circumstances, a treating agent for liquid crystal alignment obtained by mixing a solvent-soluble polyimide and a polyimide precursor, was proposed by the present applicants (JP-A-8-220541). In this case, it is possible to obtain a liquid crystal alignment film excellent in the liquid crystal alignment properties, the electrical properties and the rubbing durability, but the printing property of the treating agent for crystal alignment on substrates, was not necessarily sufficient.

It is an object of the present invention to provide a treating agent for liquid crystal alignment, which, when formed into an alignment film for a liquid crystal display device, is excellent in the electrical properties such as voltage holding ratio and charge-accumulation, in the liquid crystal alignment property, and in the liquid crystal tilt angle, etc., and further, is excellent in the printing property on substrates and in the durability of the coating film against rubbing treatment, and to provide a liquid crystal display device employing it.

### DISCLOSURE OF THE INVENTION

The present inventors have conducted extensive studies to overcome the above problems, and have accomplished the present invention. Namely, the present invention relates to a treating agent for liquid crystal alignment, which is a polyimide precursor composition comprising, as mixed, a polyimide precursor (A) represented by repeating units of the formula I and having a reduced viscosity of from 0.05 to 3.0 dl/g (in N-methylpyrrolidone at a temperature of 30°C at a concentration of 0.5 g/dl), and a polyimide precursor (B) represented by repeating units of the following formula II and having a reduced viscosity of from 0.05 to 3.0 dl/g (in N-methylpyrrolidone at a temperature of 30°C at a concentration of 0.5 g/dl), wherein the solid content ratio of the polyimide precursor (A) to the total solid content is from 5 to 95 wt%: 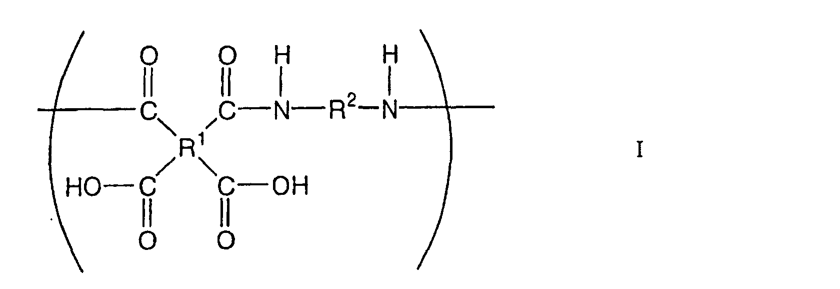 (in the formula I, R¹ is a tetravalent organic group having an alicyclic structure, from 10 to 95 mol% of R² is at least one member selected from bivalent organic groups of the following (1), and at least 5 mol% of R² is at least one member selected from bivalent organic groups of the following (2)) 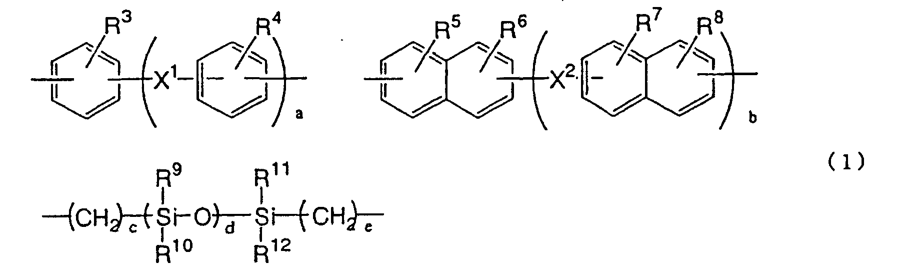 (in (1), X¹ and X² are each independently a single bond, an ether bond, an amide bond, a linear alkyl group having a carbon number of from 1 to 5, or a branched alkyl group having a carbon number of from 1 to 5; R³, R⁴, R⁵, R⁶, R⁷ and R⁸ are each independently hydrogen or an alkyl group having a carbon number of from 1 to 3; R⁹, R¹⁰, R¹¹ and R¹² are each independently an alkyl group having a carbon number of from 1 to 3 or a phenylene group; a and b are each an integer of from 0 to 3; and c, d and e are each an integer of from 1 to 3) 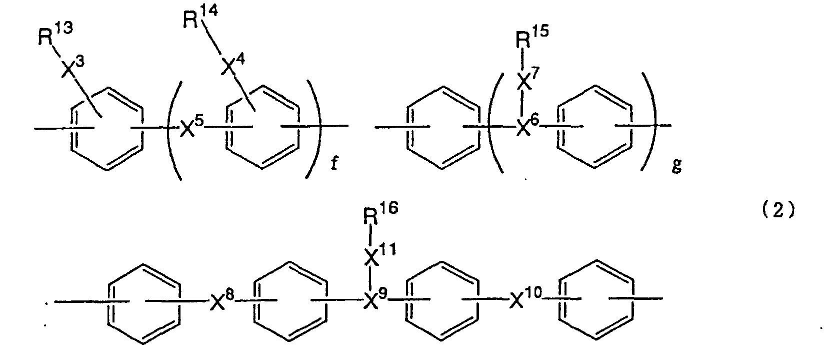 (in (2), R¹³, R¹⁴, R¹⁵ and R¹⁶ are each independently a substituent having a carbon number of at least 6; X³, X⁴, X⁷, X⁸, X¹⁰ and X¹¹ are each independently a single bond, an ether bond, an ester bond or an amide bond; X⁵ is a single bond or a linear alkyl group having a carbon number of from 1 to 5, or a branched alkyl group having a carbon number of from 1 to 5; X⁶ and X⁹ are each methine or nitrogen; f is an integer of from 0 to 3; and g is an integer of from 1 to 3) 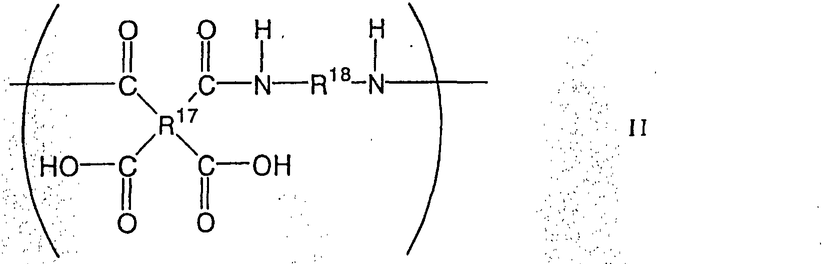 (in the formula II, R¹⁷ is a tetravalent organic group and at least 10 mol% of R¹⁷ is a tetravalent organic group having an alicyclic structure; and R¹⁸ is a bivalent organic group.)

Further, the present invention relates to a liquid crystal display device employing the above-mentioned treating agent for liquid crystal alignment.

Now, the present invention will be described in further detail. The treating agent for liquid crystal alignment of the present invention, is one which is coated on a substrate having electrodes, then dried and baked to form a polyimide film, which is used, after rubbing treatment of the film surface, as a liquid crystal alignment film.

The resin component constituting the treating agent for liquid crystal alignment of the present invention, is characterized in that it is a composition comprising a polyimide precursor (A) having a side chain represented by the above formula I, and a polyimide precursor (B) represented by the above formula II.

Here, the methods to obtain the polyimide precursors represented by the formula I and the formula II, are not particularly limited. However, usually, they can be obtained by reacting and polymerizing a tetracarboxylic dianhydride and its derivative with a diamine.

The tetracarboxylic dianhydride and its derivative to be used for obtaining the polyimide precursor (A) of the formula I, are required to have an alicyclic structure, and they are preferably tetracarboxylic acids wherein the tetravalent organic group constituting each tetracarboxylic acid is one selected from the following (3) : 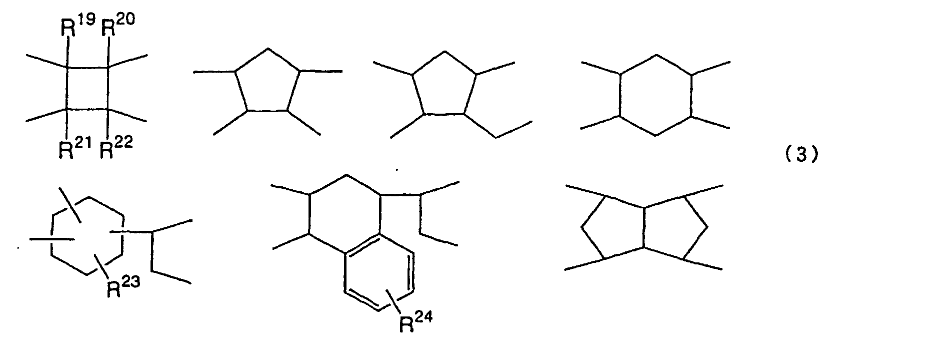 (in (3), R¹⁹, R²⁰, R²¹ and R²² are each independently hydrogen or an organic group having a carbon number of from 1 to 4; R²³ is hydrogen, fluorine or an organic group having a carbon number of from 1 to 2; and R²⁴ is hydrogen, fluorine or an organic group having a carbon number of from 1 to 4), and their dianhydrides, and their dicarboxylic acid diacid halides, etc., more preferably 1,2,3,4-cyclobutanetetracarboxylic acid, 3,4-dicarboxy-1,2,3,4-tetrahydro-1-naphthalene succinic acid, bicyclo[3,3,0]-octane-2,4,6,8-tetracarboxylic acid and their dianhydrides, and their dicarboxylic acid diacid halides, etc. These may be used alone or in combination as a mixture of two or more of them.

From 10 to 95 mol% of the diamine to be used for obtaining the polyimide precursor of the formula I, is required to be at least one type selected from the following structures: 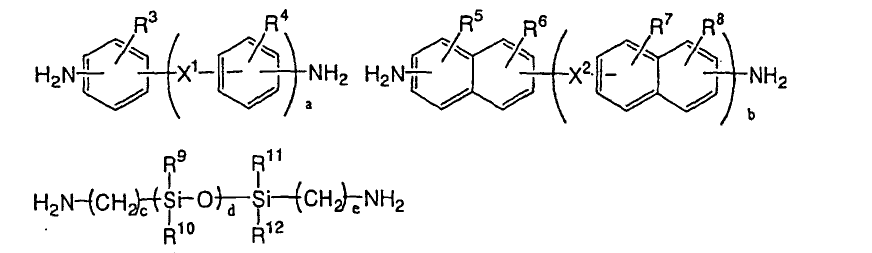 (in the formulae, X¹ and X² are each independently a single bond, an ether bond, an amide bond, a linear alkyl group having a carbon number of from 1 to 5, or a branched alkyl group having a carbon number of from 1 to 5; R³, R⁴, R⁵, R⁶, R⁷ and R⁸ are each independently hydrogen or an alkyl group having a carbon number of from 1 to 3; R⁹, R¹⁰, R¹¹ and R¹² are each independently an alkyl group having a carbon number of from 1 to 3 or a phenylene group; a and b are each an integer of from 0 to 3; and c, d and e are each an integer of from 1 to 3). It is particularly preferably paraphenylenediamine, methaphenylenediamine, 3,4'-diaminodiphenylmethane, 4,4'-diaminodiphenylmethane, 3,4'-diaminodiphenylether, 4,4'-diaminodiphenylether, 4,4'-diaminobenzanilide or 1,3-bis(3-aminopropyl)-1,1,3,3-tetramethyldisiloxane. These may be used alone or in combination as a mixture of two or more of them. The proportion of such a diamine is from 10 to 95 mol%, preferably from 50 to 95 mol%, more preferably from 70 to 90 mol%.

Further, for the purpose of increasing the liquid crystal tilt angle, it is necessary to use at least one type of diamine selected from the following structures: 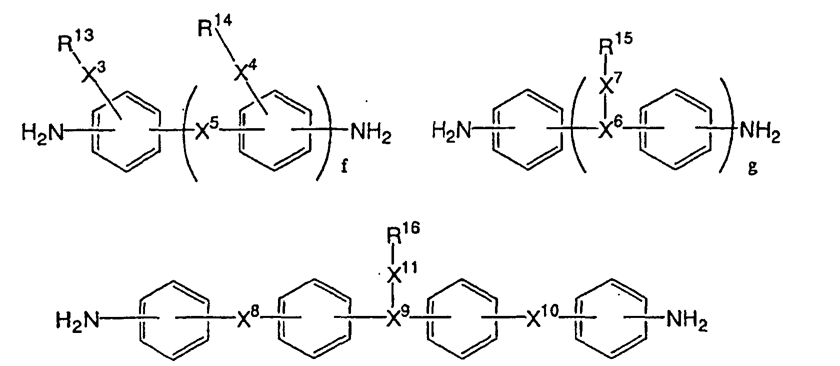 (in (2), R¹³, R¹⁴, R¹⁵ and R¹⁶ are each independently a substituent having a carbon number of at least 6; X³, X⁴, X⁷, X⁸, X¹⁰ and X¹¹ are each independently a single bond, an ether bond, an ester bond or an amide bond; X⁵ is a single bond or a linear alkyl group having a carbon number of from 1 to 5, or a branched alkyl group having a carbon number of from 1 to 5; X⁶ and X⁹ are each methine or nitrogen; f is an integer of from 0 to 3; and g is an integer of from 1 to 3) in an amount of at least 5 mol%, preferably at least 10 mol%, of the diamine used for obtaining the polyimide precursor of the formula I, and more preferably, a diamine having a cyclohexyl group, a bicyclohexyl group, a phenylcyclohexyl group or a linear alkyl group having a carbon number of at least 12, as a side chain, is used at least 10 mol%.

The degree of the liquid crystal tilt angle changes depending upon the size or the amount of the side chain of the diamine having the side chain, and if the carbon number of the side chain is less than 6, the effect of its incorporation may not be expected, and even if the carbon number is at least 6, the effect of its incorporation will be small if the amount of such a diamine is less than 5 mol%.

The diamine to be used for obtaining the polyimide precursor of the formula I, may be used in combination with other diamines within a range not to impair the characteristics of the present invention.

At least 10 ml% of the tetracarboxylic dianhydride and its derivative to be used for obtaining the polyimide precursor of the formula II, are required to be ones having alicyclic structures, preferably tetracarboxylic acids wherein the tetravalent organic group constituting each tetracarboxylic acid, is one selected from the following (3): 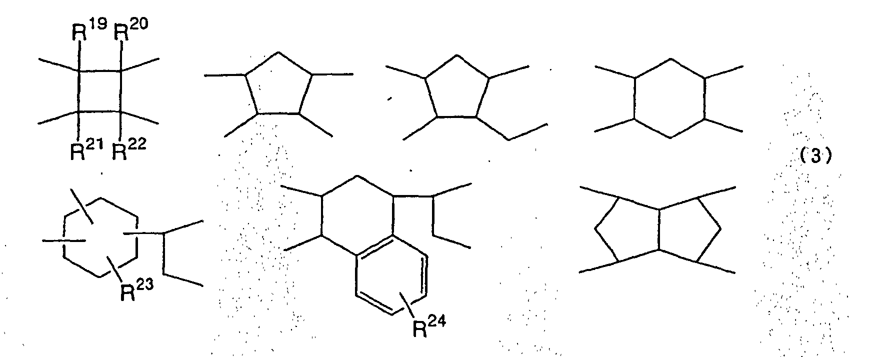 (in the formulae, R¹⁹, R²⁰, R²¹ and R²² are each independently hydrogen or an organic group having a carbon number of from 1 to 4; R²³ is hydrogen, fluorine or an organic group having a carbon number of from 1 to 2; and R²⁴ is hydrogen, fluorine or an organic group having a carbon number of from 1 to 4.) and their derivatives, and their dicarboxylic acid diacid halides etc., more preferably 1,2,3,4-cyclobutanetetracarboxylic acid, 3,4-dicarboxy-1,2,3,4-tetrahydro-1-naphthalenesuccinic acid, bicycle[3,3,0]-octane-2,4,6,8-tetracarboxylic acid and their dianhydrides, and their dicarboxylic acid diacid halides, etc. These may be used alone or in combination as a mixture of at least two of them.

Further, in order to improve the properties of the liquid crystal alignment film by the treating agent for the liquid crystal alignment of the present invention, it is preferred that from 1 to 90 mol% of all the tetracarboxylic dianhydride and its derivative to be used for obtaining the polyimide precursor of the formula II, is tetracarboxylic acids constituted by tetravalent organic groups selected from the following (5): 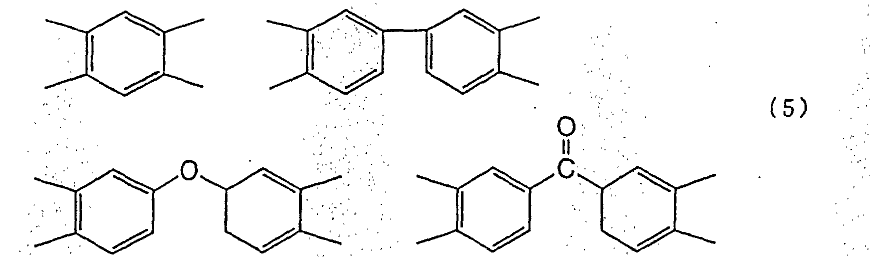 and their dianhydrides, and their dicarboxylic acid diacid halides, etc., and these can be used alone or in combination as a mixture of at least two of them, and more preferably such a tetracarboxylic dianhydride and its derivatives, are pyromellitic acid and its dianhydride, and their dicarboxylic acid diacid halides, etc.

The diamine useful for obtaining the polyimide precursor of the formula II, is not particularly limited, and it may, for example, be an aromatic diamine such as p-phenylenediamine, m-phenylenediamine, 2,5-diaminotoluene, 2,6-diaminotoluene, 4,4'-diaminobiphenyl, 3,3'-dimethyl-4,4'-diaminobiphenyl, 3,3'-dimethoxy-4,4'-diaminobiphenyl, diaminodiphenylmethane, diaminodiphenyl ether, 2,2'-diaminodiphenylpropane, bis(3,5-diethyl-4-aminophenyl)methane, diaminodiphenylsulfone, diaminobenzophenone, diaminonaphthalene, 1,4-bis(4-aminophenoxy)benzene, 1,4,-bis(4-aminophenyl)benzene, 9,10-bis(4-aminophenyl)anthracene, 1,3-bis(4-aminophenoxy)benzene, 4,4'-bis(4-aminophenoxy)diphenylsulfone, 2,2-bis[4-(4-aminophenoxy)phenyl]propane, 2,2-bis(4-aminophenyl)hexafluoropropane or 2,2-bis[4-(4-aminophenoxy)phenyl]hexafluoropropane, an alicyclic diamine such as bis (4-aminocyclohexyl)methane or bis(4-amino-3-methylcyclohexyl)methane, an aliphatic diamine such as 1,2-diaminoethane, 1,3-diaminopropane, 1,4-diaminobutane or 1,6-diaminohexane, or a silicondiamine such as 1,3-bis(3-aminopropyl)-1,1,3,3,-tetramethyldisiloxane.

As a method to obtain the polyimide precursor by reacting a tetracarboxylic dianhydride and its derivative with a diamine, it is common to let a tetracarboxylic dianhydride react with a diamine in an organic polar solvent such as N-methylpyrrolidone. At this time, the molar ratio of the tetracarboxylic dianhydride to the diamine is preferably from 0.8 to 1.2. Like in a common polycondensation reaction, the closer the molar ratio to 1, the larger the degree of polymerization of the resulting polymer.

If the degree of polymerization is too small, the strength of the coating film tends to be insufficient, and if the degree of polymerization is too large, the workability in a film-forming operation may deteriorate. Therefore, the degree of polymerization of the product by this reaction is preferably made to be from 0.05 to 3.0 dl/g as calculated as the reduced viscosity of the polyimide precursor solution (in N-methylpyrrolidone at a temperature of 30°C at a concentration of 0.5 g/dl).

The temperature for reacting the tetracarboxylic dianhydride with the diamine, is not particularly limited, and may be an optional temperature selected from a range of from -20°C to 150°C, preferably from -5°C to 100°C.

The organic polar solvent useful for the reaction of the tetracarboxylic dianhydride with the diamine, may, for example, be N,N-dimethylformamide, N,N-dimethylacetamide, N-methylpyrrolidone, N-methylcaprolactam, dimethylsulfoxide, tetramethylurea, pyridine, dimethylsulfone, hexamethylsulfoxide or γ-butyrolactone. These may be used alone or in combination as a mixture. Further, even a solvent not dissolving the polyimide precursor may be used as mixed to the above solvent within a range in which the polyimide precursor formed by the polymerizing reaction will not precipitate.

The polyimide precursor thus obtained may be used as it is, or may be used after being isolated by precipitation in a poor solvent such as methanol or ethanol and redissolved in a proper solvent. The solvent for the redissolution is not particularly limited so long as it can dissolve the polyimide precursor obtained, and may, for example, be N,N-dimethylformamide, N,N-dimethylacetamide, N-methylpyrrolidone, dimethylsulfoxide or γ-butyrolactone.

To obtain the treating agent for liquid crystal alignment of the present invention from the polyimide precursors represented by the formula I and the formula II obtained by the above method, the polyimide precursor of the formula I and the polyimide precursor of the formula II are mixed in a solid content ratio of from 5:95 to 95:5.

The mixing ratio of the polyimide precursor of the formula II to the polyimide precursor of the formula I, can be optionally selected within the above range to adjust the properties, such as the tilt angle of liquid crystal, the voltage holding ratio and the charge-accumulation property.

The treating agent for liquid crystal alignment of the present invention, may be one wherein the two types of polyimide precursors are uniformly mixed. The mixing method is not particularly limited, but from the viewpoint of sufficiently mixing the resins having different structures, it is preferred that the respective resins are preliminarily dissolved in organic solvents and adjusted to have desired solid content concentrations and solvent compositions, and then, they are mixed and stirred. The stirring time for mixing, varies depending on the viscosity or the solid content concentration of the solution, but it is usually from 0.5 to 50 hours. If the stirring time is short and the mixing is insufficient, the properties of the treating agent for liquid crystal alignment may change during its storage or during its use, and if the stirring time is unnecessarily long, the production efficiency for the treating agent for liquid crystal alignment will deteriorate.

The solvent to be used for the treating agent for liquid crystal alignment of the present invention, is not particularly limited so long as it dissolves the polyimide precursory. It may, for example, be 2-pyrrolidone, N-methylpyrrolidone, N-ethylpyrrolidone, N-vinylpyrrolidone, N,N-dimethylacetamide, N,N-dimethylformamide or γ-butyrolactone, and particularly, it is preferred that N-methylpyrrolidone is contained in an amount of at least 20%, more preferably at least 30%, based on the total weight of the polymer solution.

Further, even a solvent which does not dissolve the polyimide precursors by itself, may be used as added to the above solvent within a range not to impair the solubility. Specific examples thereof include ethylcellosolve, butylcellosolve, ethylcarbitol, butylcarbitol, ethylcarbitol acetate, ethylene glycol, 1-methoxy-2-propanol, 1-ethoxy-2-propanol, 1-butoxy-2-propanol, 1-phenoxy-2-propanol, propylene glycol monoacetate, propylene glycol diacetate, propylene glycol-1-monomethylether-2-acetate, propylene glycol-1-monoethylether-2-acetate, dipropylene glycol, dipropylene glycol monomethyl ether, 2-(2-ethoxypropoxy)propanol, methylester lactate, ethylester lactate, n-propylester lactate, n-butylester lactate and isoamylester lactate.

The content of the polyimide precursors in the treating agent for liquid crystal alignment of the present invention thus obtained, is not particularly limited so long as the solution is uniform. However, it is usually from 1 to 15 wt%, preferably from 2 to 8 wt%, as a solid content.

Further, for the a purpose of further improving the adhesive properties of a polyimide resin film to a substrate, an additive such as a coupling agent may be added to the obtained resin solution. Such a coupling agent may, for example, be a functional silane-containing compound such as 3-aminopropyl trimethoxysilane, 3-aminopropyl triethoxysilane, 3-aminopropylmethyl diethoxysilane, 2-aminopropyl triethoxysilane, N-(2-aminoethyl)-3-aminopropyl trimethoxysilane or N-(2-aminoethyl)-3-aminopropylmethyl dimethoxysilane. But e.g. an epoxy group-containing compound may also be used besides these, and such a coupling agent is not particularly limited to be one of these. Further, multiple coupling agents may be mixed for use as the case requires. The incorporating ratio of these coupling agents is usually at most 40 parts by weight based on 100 parts by weight of the solid content of the resin, preferably from 0.01 to 20 parts by weight.

The liquid crystal display device of the present invention, is one produced by coating a substrate having electrodes with the above treating agent for liquid crystal alignment, carrying out such treatments as drying, baking and rubbing to form a liquid crystal alignment film, and then, preparing a liquid crystal cell by a known method to form a liquid crystal display device.

As a base material of the substrate having electrodes, a transparent material such as glass or plastic can be used, and for a reflection type liquid crystal display device, even a non-transparent material such as silicon wafer can be used if it is used only for a substrate on one side. Likewise, for the electrodes, not only a transparent material such as ITO, but also a light-reflecting material such as aluminum can be used for a reflection type liquid crystal display device.

The coating method for the treating agent for liquid crystal alignment of the present invention, is not particularly limited. A roll coater method, a spinner method and a printing method may, for example, be mentioned, and from the viewpoint of productivity, the transfer printing method is industrially widely employed. The treating agent for liquid crystal alignment of the present invention, is excellent in the coating property on substrates, and has, for example, a characteristic that a uniform coating film can be obtained even if a small amount of foreign matters is attached on the substrate, and it is thereby particularly useful for the transfer printing method.

With respect to the drying after coating the treating agent for alignment, the drying method is not particularly limited so long as the solvent can be vaporized to such an extent that the shape of the coating film does not change until the baking.

The baking of the treating agent for liquid crystal alignment of the present invention, may be carried out at a optional temperature of from 100 to 350°C, preferably from 150°C to 300°C, more preferably from 200°C to 250°C. The conversion from the polyimide precursor to the polyimide, changes depending on the baking temperature, and the treating agent for liquid crystal alignment of the present invention, may not necessarily be imidized 100%. However, it is preferred to carry out the baking at a temperature higher by at least 10°C than the heat treatment temperature for e.g. curing of a sealing agent required in a step after the rubbing.

### BEST MODE FOR CARRYING OUT THE INVENTION

Now, the present invention will be described in further detail with reference to Examples. However, it should be understood that the present invention is by no means restricted thereto.

### PREPARATION EXAMPLE 1

13.88 g (0.07 mol) of 4,4'-diaminodiphenylmethane (hereinafter referred to as DDM) and 8.77 g (0.03 mol) of 1-dodecanoxy-2,4-diaminobenzene were dissolved in 234 g of N-methylpyrrolidone (hereinafter referred to as NMP), and 18.63 g (0.095 mol) of 1,2,3,4-cyclobutanetetracarboxylic dianhydride (hereinafter referred to as CBDA) was added thereto and reacted for 3 hours at room temperature to prepare a polyimide precursor solution. The reduced viscosity ηsp/c of the obtained resin was 0.7 dl/g (0.5 wt% solution in NMP at 30°C). It was diluted with NMP and butyl cellosolve (hereinafter referred to as BCS) so that it would have a solid content concentration of 6% and a BCS concentration of 20% to obtain a polyimide precursor solution A-1.

### PREPARATION EXAMPLE 2

19.83 g (0.1 mol) of DDM was dissolved in 222 g of NMP, and 9.81 g (0.05 mol) of CBDA and 9.60 g (0.044 mol) of pyromellitic dianhydride (hereinafter referred to as PMDA) were added thereto and reacted for 4 hours at room temperature to prepare a polyimide precursor solution. The reduced viscosity ηsp/c of the obtained resin was 0.7 dl/g (0.5 wt% solution in NMP at 30°C). It was diluted with NMP and BCS so that it would have a solid content concentration of 6% and a BCS concentration of 20% to obtain a polyimide precursor solution A-2.

### PREPARATION EXAMPLE 3

14.87 g (0.075 mol) of DDM and 7.31 g (0.025 mol) of 1-dodecanoxy-2,4-diaminobenzene were dissolved in 231 g of NMP, and 18.63 g (0.095 mol) of CBDA was added thereto and reacted for 3 hours at room temperature to prepare a polyimide precursor solution. The reduced viscosity n sp/c of the obtained resin was 0.7 dl/g (0.5 wt% solution in NMP at 30°C). It was diluted with NMP and BCS so that it would have a solid content concentration of 6% and a BCS concentration of 20% to obtain a polyimide precursor solution A-3.

### PREPARATION EXAMPLE 4

15.86 g (0.08 mol) of DDM and 5.85 g (0.02 mol) of 1-dodecanoxy-2,4-diaminobenzene were dissolved in 229 g of NMP, and 18.63 g (0.095 mol) of CBDA was added thereto and reacted for 3 hours at room temperature to prepare a polyimide precursor solution. The reduced viscosity η sp/c of the obtained resin was 0.7 dl/g. It was diluted with NMP and BCS so that it would have a solid content concentration of 6% and a BCS concentration of 20% to obtain a polyimide precursor solution A-4.

### PREPARATION EXAMPLE 5

11.9 g (0.06 mol) of DDM, 8.77 g (0.03 mol) of 1-dodecanoxy-2,4-diaminobenzene and 2.49 g (0.01 mol) of 1,3-bis(3-aminopropyl)tetramethyldisiloxane, were dissolved in 229 g of NMP, and 18.63 g (0.095 mol) of CBDA was added thereto and reacted for 3 hours at room temperature to prepare a polyimide precursor solution. The reduced viscosity ηsp/c of the obtained resin was 0.7 dl/g (0.5 wt% solution in NMP at 30°C). It was diluted with NMP and BCS so that it would have a solid content concentration of 6% and a BCS concentration of 20% to obtain a polyimide precursor solution A-5.

### PREPARATION EXAMPLE 6

19.83 g (0.1 mol) of DDM was dissolved in 255 g of NMP, and 18.43 g (0.094 mol) of CBDA was added thereto and reacted for 4 hours at room temperature to obtain a polyimide precursor solution. The reduced viscosity η sp/c of the obtained resin was 0.7 dl/g (0.5 wt% solution in NMP t 30°C). It was diluted with NMP and BCS so that it would have a solid content concentration of 6% and a BCS concentration of 20% to obtain a polyimide precursor solution A-6.

### PREPARATION EXAMPLE 7

15.86 g (0.08 mol) of DDM and 6.97 g (0.02 mol) of 1-hexadecanoxy-2,4-diaminobenzene were dissolved in 235 g of NMP, and 18.63 g (0.095 mol) of CBDA was added thereto and reacted for 3 hours at room temperature to prepare a polyimide precursor solution. The reduced viscosity η sp/c of the obtained resin was 0.7 dl/g (0.5 wt% solution in NMR at 30°C). It was diluted with NMP and BCS so that it would have a solid content concentration of 6% and a BCS concentration of 20% to obtain a polyimide precursor solution A-7.

### PREPARATION EXAMPLE 8

17.84 g (0.09 mol) of DDM and 3.49 g (0.01 mol) of 1-hexadecanoxy-2,4-diaminobenzene were dissolved in 226 g of NMP, and 18.63 g (0.095 mol) of CBDA was added thereto and reacted for 3 hours at room temperature to prepare a polyimide precursor solution. The reduced viscosity η sp/c of the obtained resin was 0.7 dl/g (0.5 wt% solution in NMP at 30°C). It was diluted with NMP and BCS so that it would have a solid content concentration of 6% and a BCS concentration of 20% to obtain a polyimide precursor solution A-8.

### PREPARATION EXAMPLE 9

17.84 g (0.09 mol) of RDM and 3.78 g (0.01 mol) of 1-octadecanoxy-2,4-diaminobenzene were dissolved in 235 g of NMP, and 18.63 g (0.095 mol) of CBDA was added thereto and reacted for 3 hours at room temperature to prepare a polyimide precursor solution. The reduced viscosity η sp/c of the obtained resin was 0.7 dl/g (0.5 wt% solution in NMP at 30°C). It was diluted with NMP and BCS so that it would have a solid content concentration of 6% and a BCS concentration of 20% to obtain a polyimide precursor solution A-9.

### PREPARATION EXAMPLE 10

10.81 g (0.1 mol) of p-phenylenediamine was dissolved in 166 g of NMP, and 18.43 g (0.094 mol) of CBDA was added thereto and reacted for 4 hours at room temperature to prepare a polyimide precursor solution. The reduced viscosity ηsp/c of the obtained resin was 0.7 dl/g (0.5 wt% solution in NMP at 30°C). It was diluted with NMP and BCS so that it would have a solid content concentration of 6% and a BCS concentration of 20% to obtain a polyimide precursor solution A-10.

### PREPARATION EXAMPLE 11

14.02 g (0.07 mol) of 4,4'-diaminodiphenyl ether and 8.77 g (0.03 mol) of 1-dodecanoxy-2,4-diaminobenzene were dissolved in 276 g of NMP, and 18.63 g (0.095 mol) of CBDA was added thereto and reacted for 3 hours at room temperature to prepare a polyimide precursor solution. The reduced viscosity ηsp/c of the obtained resin was 0.7 dl/g (0.5 wt% solution in NMP at 30°C). It was diluted with NMP and BCS so that it would have a solid content concentration of 6% and a BCS concentration of 20% to obtain a polyimide precursor solution A-11.

### PREPARATION EXAMPLE 12

19.83 g (0.1 mol) of DDM was dissolved in 111 g of NMP and 111 g γ-butyrolactone, and 9.81 (0.05 mol) of CBDA and 9.60 g (0.044 mol) of PMDA were added thereto and reacted for 4 hours at room temperature to prepare a polyimide precursor solution. The reduced viscosity η sp/c of the obtained resin was 0.7 dl/g (0.5 wt% solution in NMP at 30°C). It was diluted with γ-butyrolactone and BCS so that it would have a solid content concentration of 6% and a BCS concentration of 20% to obtain a polyimide precursor solution A-12.

### PREPARATION EXAMPLE 13

30.03 g (0.1 mol) of 3,4-dicarboxy-1,2,3,4-tetrahydro-1-naphthalene succinic dianhydride, 9.73 g (0.09 mol) of p-phenylenediamine and 3.77 g (0.01 mol) of 1-octadecanoxy-2,4-diaminobenzene were reacted in 290 g of NMP at 50°C for 20 hours to prepare a polyimide precursor intermediate solution.

50 g of this polyimide precursor intermediate solution was diluted with 100 g of NMP, and 17.6 g of acetic anhydride and 8.2 g of pyridine were added thereto as a catalyst for imidization and reacted at 40°C for 3 hours to obtain a polyimide resin solution. The reduced viscosity ηsp/c of the obtained resin was 0.8 dl/g (0.5 wt% solution in NMP at 30°C). This solution was poured into 500 ml of methanol, and white precipitate obtained was filtered and dried to obtain a white polyimide resin powder. It was confirmed by NMR that this polyimide powder was 90% imidized.

This polyimide powder was dissolved in γ-butyrolactone and BCS so that it would have a solid content concentration of 6% and a BCS concentration of 20% to obtain a polyimide solution P-1.

### EXAMPLE 1

The polyimide precursor solution A-1 obtained in Preparation Example 1, and the polyimide precursor solution A-2 obtained in Preparation Example 2, were mixed in a weight ratio of 2:8, stirred at room temperature for 5 hours and then filtered by a filter having an opening size of 0.5 µm to prepare a treating agent B-1 for liquid crystal alignment.

This treating agent for liquid crystal alignment was printed on a glass substrate having transparent electrodes by a printer, and as a result, the printing status of the coating film was uniform and no orange peel-like unevenness was observed. Further, on a chromium-vapor-deposited substrate which was contaminated with e.g. foreign matters in advance (prepared by dropping a liquid having 6 µm spacers dispersed in an organic solvent, followed by drying), this treating agent for liquid crystal alignment was spin-coated, and as a result, no repelling of the film was observed around the spacers or at other portions, and it was also confirmed by an optical microscope observation that a uniform coating film was formed.

This treating agent for liquid crystal alignment was spin-coated on a glass substrate having transparent electrodes, and baked on a hot plate at a temperature of 230°C for 15 minutes to obtain a substrate provided with a polyimide film having a film thickness of 1000 Å. The polyimide film was rubbed by a cloth, and the surface status of the film was observed by an optical microscope, whereby no separation or abrasion of the film was observed. Such substrates were combined with spacers of 50 µm sandwiched therebetween, so that the rubbing directions were opposite to each other, and their peripheries were fixed by an epoxy type adhesive, whereupon a liquid crystal MLC-2003 (manufactured by Merck Co.) was injected to prepare a liquid crystal cell. The injection port of the liquid crystal was sealed by an epoxy type adhesive.

The alignment state of this liquid crystal cell was observed by a polarization microscope to confirm that a uniform alignment of liquid crystal without defects, was obtained. With respect to this cell, the tilt angle of the liquid crystal was measured by the crystal rotation method, and found to be 4.1°.

Then, in order to measure the electrical properties of the liquid crystal cell, using substrates each having a polyimide film formed and rubbed in the same manner as above, spacers of 6 µm were spread on the respective film surfaces, then the substrates were combined so that the rubbing directions would cross at right angles, and their peripheries were fixed by an epoxy type adhesive, whereupon liquid crystal MLC-2003 (manufactured by Merck Co.) was injected to prepare a 90° twist liquid crystal cell. The injection port for liquid crystal was sealed by an epoxy type adhesive. The alignment state of the liquid crystal in this cell was observed by a polarization microscope to confirm that an uniform alignment without defects, was obtained.

The voltage holding ratio of this liquid crystal cell was measured and found to show a high voltage holding property of 98% at 23°C and 82% at 90°C. Further, rectangular waves of 30 Hz/±3V having a direct current of 3V superimposed thereon were applied to this cell at 23°C for 60 minutes, and immediately after the direct current of 3 V was cut off, the residual voltage remaining in the liquid crystal cell was measured by an optical flicker elimination method and found to be 0.05 V, i.e. the charge-accumulation was small.

### EXAMPLE 2

The polyimide precursor solution A-1 obtained in Preparation Example 1 and the polyimide precursor solution A-2 obtained in Preparation Example 2, were mixed in a weight ratio of 1:9, stirred at room temperature for 5 hours and then filtered by a filter having an opening size of 0.5 µm to prepare a treating agent B-2 for liquid crystal alignment.

The treating agent for alignment was evaluated in the same manner as in Example 1. As a result, the printing property, the coating film uniformity, the rubbing durability, the liquid crystal alignment property, etc., were all good like in Example 1, and the liquid crystal tilt angle was 3.0°. Further, the voltage holding ratio of the liquid crystal cell showed a high voltage holding ratio of 98% at 23°C and 80% at 90°C, and the residual voltage was 0.1 V, i.e. the charge-accumulation was small.

### EXAMPLE 3

The polyimide precursor solution A-1 obtained in Preparation Example 1 and the polyimide precursor solution A-2 obtained in Preparation Example 2, were mixed in a weight ratio of 5:5, stirred at room temperature for 5 hours and then filtered by a filter having an opening size of 0.5 µm to prepare a treating agent B-3 for liquid crystal alignment.

The treating agent for alignment was evaluated in the same manner as in Example 1. As a result, the printing property, the coating film uniformity, the rubbing durability, the liquid crystal alignment property, etc., were all good like in Example 1, and the liquid crystal tilt angle was 4.8°. Further, the voltage holding ratio of the liquid crystal cell showed a high voltage holding ratio of 98% at 23°C and 82% at 90°C, and the residual voltage was 0.1 V, i.e. the charge-accumulation was small.

### EXAMPLE 4

The polyimide precursor solution A-3 obtained in Preparation Example 3 and the polyimide precursor solution A-2 obtained in Preparation Example 2, were mixed in a weight ratio of 2:8, stirred at room temperature for 5 hours and then filtered by a filter having an opening size of 0.5 µm to prepare a treating agent B-4 for liquid crystal alignment.

The treating agent for alignment was evaluated in the same manner as in Example 1. As a result, the printing property, the coating film uniformity, the rubbing durability, the liquid crystal alignment property, etc., were all good like in Example 1, and the liquid crystal tilt angle was 3.3°. Further, the voltage holding ratio of the liquid crystal cell showed a high voltage holding ratio of 98% at 23°C and 81% at 90°C, and the residual voltage was 0.05 V, i.e. the charge-accumulation was small.

### EXAMPLE 5

The polyimide precursor solution A-4 obtained in Preparation Example 4 and the polyimide precursor solution A-2 obtained in Preparation Example 2, were mixed in a weight ratio of 2:8, stirred at room temperature for 5 hours, and then filtered by a filter having an opening size of 0.5 µm to prepare a treating agent B-5 for liquid crystal alignment.

The treating agent for alignment was evaluated in the same manner as in Example 1. As a result, the printing property, the coating film uniformity, the rubbing durability, the liquid crystal alignment property, etc., were all good like in Example 1, and the liquid crystal tilt angle was 3.0°. Further, the voltage holding ratio of the liquid crystal cell showed a high voltage holding ratio of 98% at 23°C and 82% at 90°C, and the residual voltage was 0.05 V, i.e. the charge-accumulation was small.

### EXAMPLE 6

The polyimide precursor solution A-5 obtained in Preparation Example 5 and the polyimide precursor solution A-2 obtained in Preparation Example 2, were mixed in a weight ratio of 2:8, stirred at room temperature for 5 hours and then filtered by a filter having an opening size of 0.5 µm to prepare a treating agent B-6 for liquid crystal alignment.

The treating agent for alignment was evaluated in the same manner as in Example 1. As a result, the printing property, the coating film uniformity, the rubbing durability, the liquid crystal alignment property, etc., were all good like in Example 1, and the liquid crystal tilt angle was 3.8°. Further, the voltage holding ratio of the liquid crystal cell showed a high voltage holding ratio of 98% at 23°C and 82% at 90°C, and the residual voltage was 0 V, i.e. the charge-accumulation was small.

### EXAMPLE 7

The polyimide precursor solution A-1 obtained in Preparation Example 1 and the polyimide precursor solution A-6 obtained in Preparation Example 5, were mixed in a weight ratio of 2:8, stirred at room temperature for 5 hours, and then filtered by a filter having an opening size of 0.5 µm to prepare a treating agent B-7 for liquid crystal alignment.

The treating agent for alignment was evaluated in the same manner as in Example 1. As a result, the printing property, the coating film uniformity, the rubbing durability, the liquid crystal alignment property, etc., were all good like in Example 1, and the liquid crystal tilt angle was 4.5°. Further, the voltage holding ratio of the liquid crystal cell showed a high voltage holding ratio of 98% at 23°C and 83% at 90°C, and the residual voltage was 0.05 V, i.e. the charge-accumulation was small.

### EXAMPLE 8

The polyimide precursor solution A-7 obtained in Preparation Example 7 and the polyimide precursor solution A-6 obtained in Preparation Example 6, were mixed in a weight ratio of 2:8, stirred at room temperature for 5 hours, and then filtered by a filter having an opening size of 0.5 µm to prepare a treating agent B-8 for liquid crystal alignment.

The treating agent for alignment was evaluated in the same manner as in Example 1. As a result, the printing property, the coating film uniformity, the rubbing durability, the liquid crystal alignment property, etc., were all good like in Example 1, and the liquid crystal tilt angle was 12°. Further, the voltage holding ratio of the liquid crystal cell showed a high voltage holding ratio of 98% at 23°C and 83% at 90°C, and the residual voltage was 0.05 V, i.e. the charge-accumulation was small.

### EXAMPLE 9

The polyimide precursor solution A-8 obtained in Preparation Example 8 and the polyimide precursor solution A-6 obtained in Preparation Example 6, were mixed in a weight ratio of 2:8, stirred at room temperature for 5 hours, and then filtered by a filter having an opening size of 0.5 µm to prepare a treating agent B-9 for liquid crystal alignment.

The treating agent for alignment was evaluated in the same manner as in Example 1. As a result, the printing property, the coating film uniformity, the rubbing durability, the liquid crystal alignment property, etc., were all good like in Example 1, and the liquid crystal tilt angle was 6.4°. Further, the voltage holding ratio of the liquid crystal cell showed a high voltage holding ratio of 98% at 23°C and 83% at 90°C, and the residual voltage was 0.05 V, i.e. the charge-accumulation was small.

### EXAMPLE 10

The polyimide precursor solution A-8 obtained in Preparation Example 8 and the polyimide precursor solution A-6 obtained in Preparation Example 6, were mixed in a weight ratio of 25:75, stirred at room temperature for 5 hours, and then filtered by a filter having an opening size of 0.5 µm to prepare a treating agent B-10 for liquid crystal alignment.

The treating agent for alignment was evaluated in the same manner as in Example 1. As a result, the printing property, the coating film uniformity, the rubbing durability, the liquid crystal alignment property, etc., were all good like in Example 1, and the liquid crystal tilt angle was 5.8°. Further, the voltage holding ratio of the liquid crystal cell showed a high voltage holding ratio of 98% at 23°C and 83% at 90°C, and the residual voltage was 0.05 V, i.e. the charge-accumulation was small.

### EXAMPLE 11

The polyimide precursor solution A-8 obtained in Preparation Example 8 and the polyimide precursor solution A-6 obtained in Preparation Example 6, were mixed in a weight ratio of 1:9, stirred at room temperature for 5 hours, and then filtered by a filter having an opening size of 0.5 µm to prepare a treating agent B-11 for liquid crystal alignment.

This treating agent for alignment was evaluated in the same manner as in Example 1. As a result, the printing property, the coating film uniformity, the rubbing durability, the liquid crystal alignment property, etc., were all good like in Example 1, and the liquid crystal tilt angle was 4.0°. Further, the voltage holding ratio of the liquid crystal cell showed a high voltage holding ratio of 98% at 23°C and 81% at 90°C, and the residual voltage was 0.05 V, i.e. the charge-accumulation was small.

### EXAMPLE 12

The polyimide precursor solution A-9 obtained in Preparation Example 9 and the polyimide precursor solution A-6 obtained in Preparation Example 6, were mixed in a weight ratio of 2:8, stirred at room temperature for 5 hours, and then filtered by a filter having an opening size of 0.5 µm to prepare a treating agent B-12 for liquid crystal alignment.

The treating agent for alignment was evaluated in the same manner as in Example 1. As a result, the printing property, the coating film uniformity, the rubbing durability, the liquid crystal alignment property, etc., were all good like in Example 1, and the liquid crystal tilt angle was 12°. Further, the voltage holding ratio of the liquid crystal cell showed a high voltage holding ratio of 98% at 23°C and 83% at 90°C, and the residual voltage was 0.05 V, i.e. the charge-accumulation was small.

### EXAMPLE 13

The polyimide precursor solution A-9 obtained in Preparation Example 9 and the polyimide precursor solution A-6 obtained in Preparation Example 6, were mixed in a weight ratio of 1:9, stirred at room temperature for 5 hours, and then filtered by a filter having an opening size of 0.5 µm to prepare a treating agent B-13 for liquid crystal alignment.

The treating agent for alignment was evaluated in the same manner as in Example 1. As a result, the printing property, the coating film uniformity, the rubbing durability, the liquid crystal alignment property, etc., were all good like in Example 1, and the liquid crystal tilt angle was 11°. Further, the voltage holding ratio of the liquid crystal cell showed a high voltage holding ratio of 98% at 23°C and 82% at 90°C, and the residual voltage was 0.05 V, i.e. the charge-accumulation was small.

### EXAMPLE 14

The polyimide precursor solution A-1 obtained in Preparation Example 1 and the polyimide precursor solution A-10 obtained in Preparation Example 10, were mixed in a weight ratio of 2:8, stirred at room temperature for 5 hours, and then filtered by a filter having an opening size of 0.5 µm to prepare a treating agent B-14 for liquid crystal alignment.

This treating agent for alignment was evaluated in the same manner as in Example 1. As a result, the printing property, the coating film uniformity, the rubbing durability, the liquid crystal alignment property, etc., were all good like in Example 1, and the liquid crystal tilt angle was 4.3°. Further, the voltage holding ratio of the liquid crystal cell showed a high voltage holding ratio of 98% at 23°C and 82% at 90°C, and the residual voltage was 0.05 V, i.e. the charge-accumulation was small.

### EXAMPLE 15

The polyimide precursor solution A-11 obtained in Preparation Example 11 and the polyimide precursor solution A-6 obtained in Preparation Example 6, were mixed in a weight ratio of 2:8, stirred at room temperature for 5 hours, and then filtered by a filter having an opening size of 0.5 µm to prepare a treating agent B-15 for liquid crystal alignment.

This treating agent for alignment was evaluated in the same manner as in Example 1. As a result, the printing property, the coating film uniformity, the rubbing durability, the liquid crystal alignment property, etc., were all good like in Example 1, and the liquid crystal tilt angle was 4.5°. Further, the voltage holding ratio of the liquid crystal cell showed a high voltage holding ratio of 98% at 23°C and 78% at 90°C, and the residual voltage was 0.1 V, i.e. the charge-accumulation was small.

### COMPARATIVE EXAMPLE 1

The polyimide precursor solution A-1 obtained in Preparation Example 1, was filtered by a filter having an opening size of 0.5 µm to prepare a treating agent C-1 for liquid crystal alignment.

This treating agent for alignment was evaluated in the same manner as in Example 1. As a result, the printing property, the coating film uniformity, the rubbing durability, the liquid crystal alignment property, etc., were all good like in Example 1, and the liquid crystal tilt angle was 7.1°. Further, the voltage holding ratio of the liquid crystal cell, showed a high voltage holding ratio of 98% at 23°C and 83% at 90°C. However, the residual voltage was 0.5 V, i.e. the charge-accumulation was large.

### COMPARATIVE EXAMPLE 2

The polyimide precursor solution A-5 obtained in Preparation Example 5, was filtered by a filter having an opening size of 0.5 µm to prepare a treating agent C-2 for liquid crystal alignment.

This treating agent for alignment was evaluated in the same manner as in Example 1. As a result, the printing property, the coating film uniformity, the rubbing durability; the liquid crystal alignment property, etc., were all good like in Example 1, and the liquid crystal tilt angle was 6.4°. Further, the voltage holding ratio of the liquid crystal cell showed a high voltage holding ratio of 97% at 23°C and 83% at 90°C. However, the residual voltage was 0.45 V, i.e. the charge-accumulation was large.

### COMPARATIVE EXAMPLE 3

The polyimide precursor solution A-2 obtained in Preparation Example 2, was filtered by a filter having an opening size of 0.5 µm to prepare a treating agent C-3 for liquid crystal alignment.

This treating agent for alignment was evaluated in the same manner as in Example 1. As a result, the printing property, the coating film uniformity, the rubbing durability, the liquid crystal alignment property, etc., were all good like in Example 1, but the liquid crystal tilt angle was 1.5°, which is small. Further, the voltage holding ratio of the liquid crystal cell showed a low voltage holding ratio of 95% at 23°C and 55% at 90°C. The residual voltage was 0.1 V, i.e. the charge-accumulation was small.

### COMPARATIVE EXAMPLE 4

The polyimide precursor solution A-6 obtained in Preparation Example 6, was filtered by a filter having an opening size of 0.5 µm to prepare a treating agent C-4 for liquid crystal alignment.

This treating agent for alignment was evaluated in the same manner as in Example 1. As a result, the printing property, the coating film uniformity, the rubbing durability, the liquid crystal alignment property, etc., were all good like in Example 1, but the liquid crystal tilt angle was 2.3°, which is small. The voltage holding ratio of the liquid crystal cell showed a high voltage holding ratio of 98% at 23°C and 82% at 90°C, and the residual voltage was 0.1 V, i.e. the charge-accumulation was small.

### COMPARATIVE EXAMPLE 5

The polyimide solution P-1 obtained in Preparation Example 13 and the polyimide precursor solution A-12 obtained in Preparation Example 12, were mixed in a weight ratio of 2:8, stirred at room temperature for 5 hours, and then filtered by a filter having an opening size of 0.5 µm to prepare a treating agent C-5 for liquid crystal alignment.

This treating agent for alignment was evaluated in the same manner as in Example 1. As a result, the status of coating film printed on a glass substrate having transparent electrodes by a printer, was uniform, but orange peel-like unevenness was slightly observed. Further, when it was spin-coated on a chromium-vapor-deposited substrate contaminated by e.g. foreign matters in advance, repelling of the film was seen, and it was confirmed by an optical microscope observation that there was fine unevenness in the film thickness. The rubbing durability and the liquid crystal alignment property were good. The liquid crystal tilt angle was 5.6°. Further, the voltage holding ratio of the liquid crystal cell showed a high voltage holding ratio of 98% at 23°C and 80% at 90°C, and the residual voltage was 0.1 V, i.e. the charge-accumulation was small.

### INDUSTRIAL APPLICABILITY

The treating agent for liquid crystal alignment of the present invention, can produce a liquid crystal alignment film which is excellent in the coating film uniformity at the time of printing and further, is excellent in the electrical properties such as the voltage holding ratio and charge-accumulation, in the liquid crystal alignment property and in the liquid crystal tilt angle. The liquid crystal display device having a liquid crystal alignment film formed by employing the treating agent for liquid crystal alignment of the present invention, has properties superior to the conventional ones, and the yield in the production will also be improved.

## Claims

1. A treating agent for liquid crystal alignment, which is a polyimide precursor composition comprising, as mixed, a polyimide precursor (A) represented by repeating units of the following formula I and having a reduced viscosity of from 0.05 to 3.0 dl/g (in N-methylpyrrolidone at a temperature of 30°C at a concentration of 0.5 g/dl), and a polyimide precursor (B) represented by repeating units of the following formula II and having a reduced viscosity of from 0.05 to 3.0 dl/g (in N-methylpyrrolidone at a temperature of 30°C at a concentration of 0.5 g/dl), wherein the solid content ratio of the polyimide precursor (A) to the total solid content is from 5 to 95 wt%: 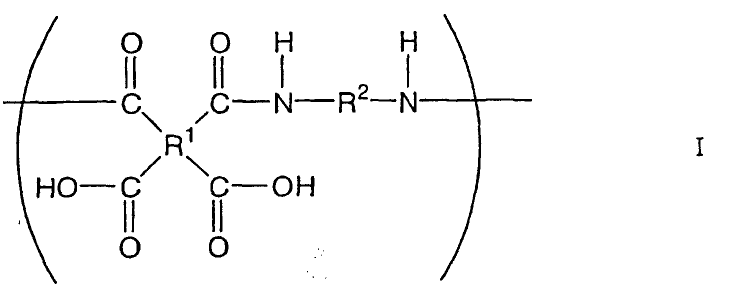 (in the formula I, R¹ is a tetravalent organic group having an alicyclic structure, from 10 to 95 mol% of R² is at least one member selected from bivalent organic groups of the following (1), and from 5 to 90 mol% of R² is at least one member selected from bivalent organic groups of the following (2) 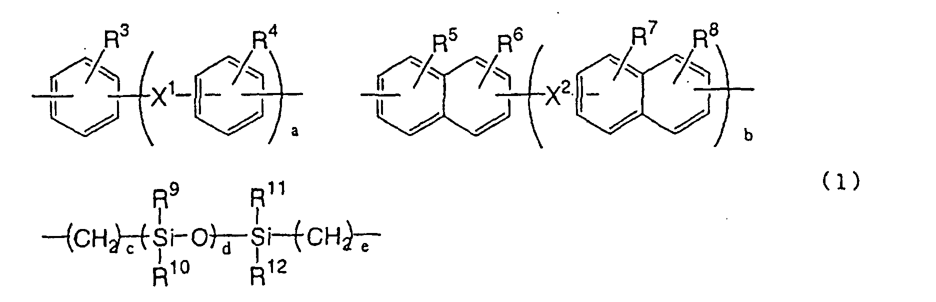 (in (1), X¹ and X² are each independently a single bond, an ether bond, an amide bond, a linear alkyl group having a carbon number of from 1 to 5, or a branched alkyl group having a carbon number of from 1 to 5; R³, R⁴, R⁵, R⁶, R⁷ and R⁸ are each independently hydrogen or an alkyl group having a carbon number of from 1 to 3; R⁹, R¹⁰, R¹¹ and R¹² are each independently an alkyl group having a carbon number of from 1 to 3 or a phenylene group; a and b are each an integer of from 0 to 3; and c, d and e are each an integer of from 1 to 3) 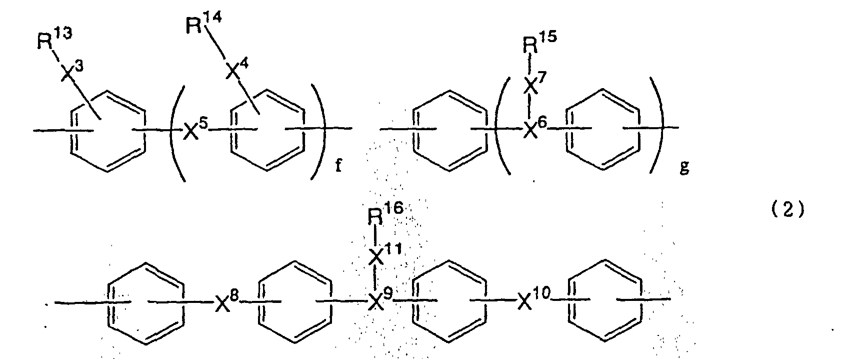 (in (2), R¹³, R¹⁴, R¹⁵ and R¹⁶ are each independently a substituent having a carbon number of at least 6; X³, X⁴, X⁷, X⁸, X¹⁰ and X¹¹ are each independently a single bond, an ether bond, an ester bond or an amide bond; X⁵ is a single bond or a linear alkyl group having a carbon number of from 1 to 5, or a branched alkyl group having a carbon number of from 1 to 5; X⁶ and X⁹ are each methine or nitrogen; f is an integer of from 0 to 3; and g is an integer of from 1 to 3) 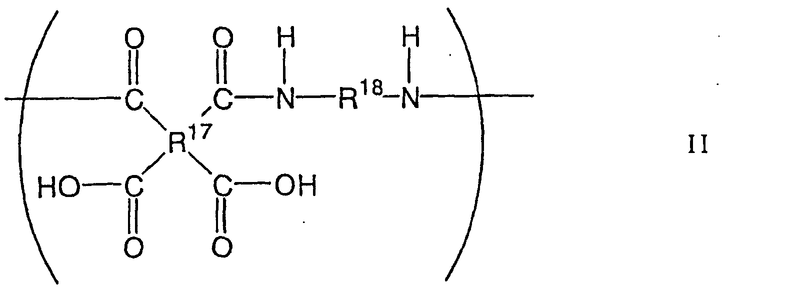 (in the formula II, R¹⁷ is a tetravalent organic group and at least 10 mol% of R¹⁷ is a tetravalent organic group having an alicyclic structure; and R¹⁸ is a bivalent organic group.)

2. The treating agent for liquid crystal alignment according to Claim 1, wherein R¹ in the formula I is at least one member selected from tetravalent organic groups of the following (3): 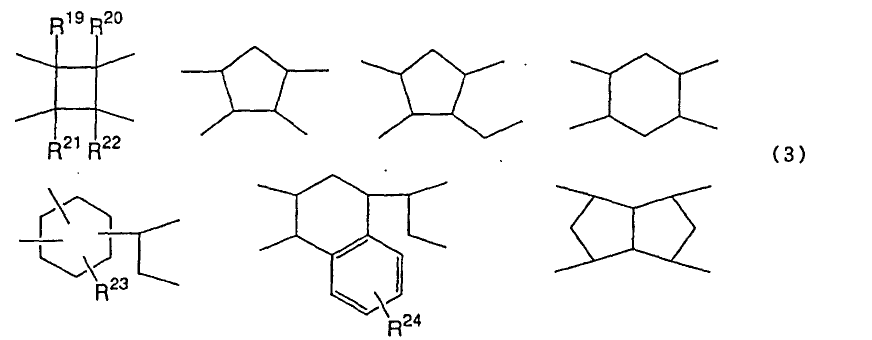 (in (3), R¹⁹, R²⁰, R²¹ and R²² are each independently hydrogen or an organic group having a carbon number of from 1 to 4; R²³ is hydrogen, fluorine or an organic group having a carbon number of from 1 to 2; and R²⁴ is hydrogen, fluorine or an organic group having a carbon number of from 1 to 4.)

3. The treating agent for liquid crystal alignment according to Claim 1 or 2, wherein the alicyclic structure of R¹⁷ in the formula II is at least one member selected from the tetravalent organic groups of the above (3).

4. The treating agent for liquid crystal alignment according to any one of Claims 1 to 3, wherein R¹ in the formula I is at least one member selected from tetravalent organic groups of the following (4):

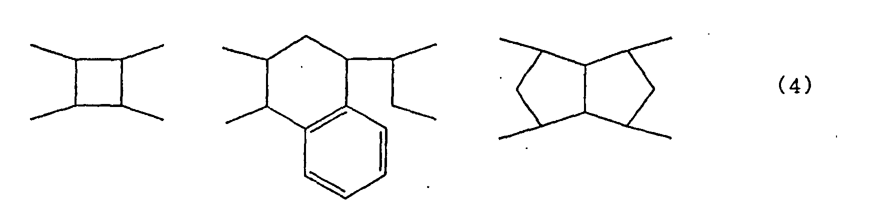

5. The treating agent for liquid crystal alignment according to any one of Claims 1 to 4, wherein the alicyclic structure of R¹⁷ in the formula II is at least one member selected from the tetravalent organic groups of the above (4).

6. The treating agent for liquid crystal alignment according to any one of Claims 1 to 5, wherein from 1 to 90 mol% (provided that the sum of this molar ratio and the molar ratio of R¹⁷ being the tetravalent organic group having an alicyclic structure, does not exceed 100 mol%) of R¹⁷ in the formula II is at least one member selected from tetravalent organic groups of the following (5) :

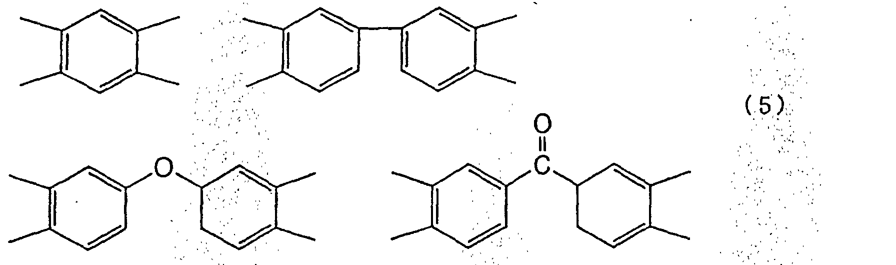

7. The treating agent for liquid crystal alignment according to any one of Claims 1 to 6, wherein from 1 to 90 mol% (provided that the sum of this molar ratio and the molar ratio of R¹⁷ being the tetravalent organic group having an alicyclic structure, does not exceed 100 mol%) of R¹⁷ in the formula II is the following (6):

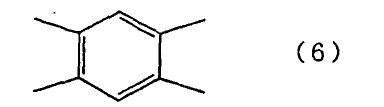

8. The treating agent for liquid crystal alignment according to any one of Claims 1 to 7, wherein (1) in the formula I is at least one member selected from bivalent organic groups of the following (7).

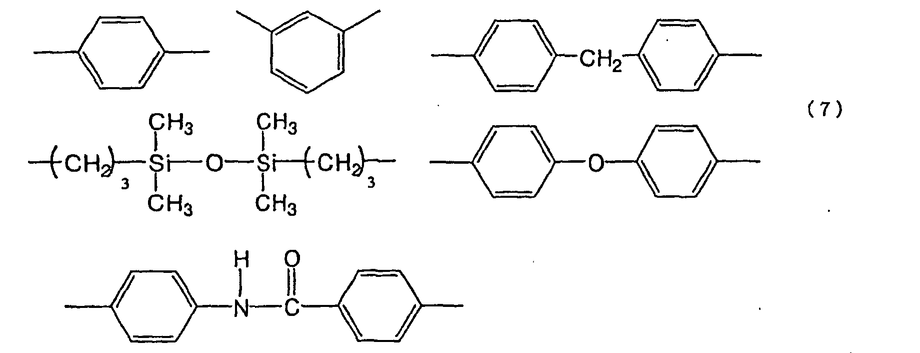

9. A liquid crystal display device employing the treating agent for liquid crystal alignment as defined in any one of Claims 1 to 8.
